# EUROPEAN PATENT SPECIFICATION

(11) **EP 3 792 053 B1**
(45) Date of publication and mention of the grant of the patent: **22.11.2023**
(21) Application number: 20196372.5
(22) Date of filing: 16.09.2020
(51) Int. Cl.: B32B 5/02, E04F 15/10, B32B 5/26, E04F 13/18

(54) **HETEROGENEOUS SURFACE COVERING, IN PARTICULAR LUXURY VINYL TILE, MANUFACTURED ON COATING LINE BASED ON THERMOPLASTIC MATERIAL**
HETEROGENER OBERFLÄCHENBELAG, INSBESONDERE LUXUSVINYLFLIESEN, HERGESTELLT AUF EINER BESCHICHTUNGSANLAGE AUF BASIS VON THERMOPLASTISCHEM MATERIAL
REVÊTEMENT DE SURFACE HÉTÉROGÈNE, EN PARTICULIER DE CARREAU DE LUXE EN VINYLE, FABRIQUÉ SUR UNE LIGNE DE REVÊTEMENT À BASE DE MATÉRIAU THERMOPLASTIQUE

(30) Priority: 16.09.2019 RU 2019129023
(43) Date of publication of application: 17.03.2021
(73) Proprietor: Tarkett GDL S.A., 9779 Lentzweiler (LU)
(72) Inventor: Momirov, Tanja, bb 21400 Backa Palanka (RS); Jovovic, Ivana, bb 21400 Backa Palanka (RS); Pejak, Dragan, bb 21400 Backa Palanka (RS)
(74) Representative: Lapienis, Juozas

(56) References cited:
- EP-A1- 3 330 055
- WO-A2-2013/118030
- US-A1- 2019 145 109

## Description

The present invention relates to heterogeneous surface coverings manufactured on the basis of a thermoplastic material, preferably on the basis of polyvinyl chioride (PVC), and designed for covering floors, walls and other surfaces. In particular, the present invention relates to tiles of the so-called LVT type ("Luxury Vinyl Tile").

The use of PVC for the manufacture of coatings has become widespread due to the positive characteristics of the end product obtained, including high wear resistance, durability, strength, etc. Furthermore, in the conditions of strong competition and increasing requirements for the operational and technical characteristics of coatings, it is very urgent to perform activities on improving the physico-mechanical and physicochemical parameters, manufacturability and decorative-aesthetic properties of coatings.

Currently, heterogeneous surface coverings manufactured from thermoplastic material, especially PVC are produced by various methods, among which, in particular, the so-called coating process is known, which is characterized by high productivity, the absence of special duplicate lines, and the product obtained by this method has high operational and technical characteristics. During the coating process, PVC pastes are used to impregnate and coat a base layer (glass veil). The PVC impregnated glass veil is subsequently processed in an oven. This coating process is typical for the manufacture of rolls of heterogeneous surface coverings. In addition to rolls, the consumers need also products available in the form of tiles. The tiles have different mechanical characteristics compared to the rolls, especially they are less flexible. This can be explained because tile products are obtained from calendared sheet and are made of several layers that are fused together under heat and pressure. So there is a need to be able to produce both rolls and LVT with the same process and equipment. Thus, an urgent problem is to develop a surface covering in the form of a tile that is made with the use of the coating technology and is characterized by the stiffness required for an LVT product.

For example, US Patent No. US4698258 (publ. on 06.10.1987) is known in the art, which discloses a solution relating to coatings with improved characteristics, including stability of the linear dimensions and a relatively high stiffness along with good flexibility providing ease of operation. The improved characteristics of the solution are ensured by the presence of two parallel layers of a glass veil, impregnated with a composition based on PVC and separated by a foamed inner layer based on PVC.

The US patent application US 2019/0145109 A1 (publ. on 16.05.2019) is also known in the art, disclosing a multilayer panel for making a floor covering comprising, a wear layer bonded to a back layer, wherein the back layer is derived from at least a thermoplastic material, a plasticizer and fillers, wherein the wear layer comprises a surface layer derived from at least polyvinyl chloride (PVC), the surface layer having a Shore D hardness greater than or equal to 60 and a Young's modulus greater than or equal to 1000 MPa. The solution disclosed in the above-mentioned document is considered to be an analogue of the claimed invention.

Further, the European patent application EP 3 330 055 A1 (publ. on 06.06.2018) discloses a floor tile and a process for manufacturing thereof. 1n particular, this prior art document relates to a floor tile having a core layer, the core layer comprising: a plurality of adjacent superimposed sheets, each of the sheets containing at least 50 wt% of glass fibers; a first layer of thermoplastic material; and a second layer of thermoplastic material, wherein said plurality of adjacent superimposed sheets is sandwiched between, and at least partly impregnated by the first layer and the second layer.

The closest analogue of the claimed invention, which is taken as a prototype, is the solution disclosed in international publication WO 2018/162828 (publ. on 13.09.2018), aimed at improving sound insulating properties of a surface covering and solving the problem of strength and stability of linear dimensions of the surface covering, which have been lost over time. Said characteristics of the surface covering are ensured by the presence of a base layer, such as, in particular, a glass veil, woven scrim, or a combination thereof, located between front and back layers based on plasticised PVC. The front layer is connected to a decorative layer consisting of a transparent protecting layer made of, for example, plasticised PVC, as well as a decorative film, and the back layer is provided with a sublayer based on non-woven fabric comprising natural, synthetic or synthetic mineral fibers, including fiberglass. The floor covering according to the above mentioned document is formed by calendaring.

The disadvantages of said solutions include a relatively low stiffness.

The problem solved by the claimed invention lies in developing an heterogeneous surface covering on the basis of a thermoplastic material, the implementation of which will ensure the achievement of the technical effect consisting in increasing the stiffness of the tile surface covering that is made with the use of the coating technology and, at the same time, preserving the flexibility sufficient for its operation.

The assigned problem is solved by developing a heterogeneous surface covering on the basis of a thermoplastic material, comprising:
- a base layer comprising a reinforcement in the form of a glass veil, impregnated on both faces with an a thermoplastic material;
- a backing layer, located on the back of the base layer and comprising an additional reinforcement in the form of a glass grid impregnated with a thermoplastic material;
- a top layer, located on the top of the base layer and comprising a decor layer (printed design) coated with a transparent wear layer on the basis of a thermoplastic material,
wherein said layers are connected to each other by being subjected to high temperatures. According to a preferred embodiment, the surface covering is an LVT tile ("Luxury Vinyl Tile"), and the thermoplastic material is a plasticised polyvinyl chloride (PVC).

The base layer comprising the impregnated glass veil serves as a base for application of all subsequent layers and also provides for stiffness and stability of linear dimensions of the surface covering. The impregnation thermoplastic material serves the purpose of reinforcing the glass veil and provides for a possibility of high quality application of the additional layers. The density and thickness of the base layer have impact on the indices of residual deformation and restorability, and all the basic consumer characteristics of the finished product, such as flexibility, elasticity, heat and noise insulation, restorability, residual deformation, depend on the density and thickness of the base layer. The base layer is needed for application of the printed design. The transparent wear layer (the so-called "working" layer) is necessary for protecting the printed design and has also an impact like base layer.

An additional reinforcement is comprised on the backing layer located on the back of the base layer, this additional reinforcement is a glass veil reinforced with a scrim based on glass yarn and being connected with the other layers by being subjected to high temperatures and being impregnated with a polymeric material to form a leveiling backing layer. This backing layer provides for an increased stiffness of the surface covering based on a thermoplastic material and, at the same time, preserves flexibility sufficient for its operation. Moreover, the presence of this additional reinforcement increases stability of linear dimensions of the surface covering (resistance to stretching in vertical, horizontal and diagonal directions); and, therefore, this surface covering is more wear resistant and durable. The connection of the different layers by subjecting to high temperatures enables to produce the claimed surface covering by using a line normally used for producing a roll of heterogeneous vinyl coating, thus providing a usually too flexible sheet with the necessary stiffness. At the same time, the leveiling backing layer provides the surface covering with an even back surface suitable for a uniform application of the back printed design, thereby providing the surface covering with a finished look, and, accordingly, improving its decorative-aesthetic characteristics, as well as providing improved heat and sound insulating properties.

The printed design is applied on the top of the base layer with the use of printing devices, for example print cylinders. The design ensures the attractiveness of the product and is a key factor influencing the choice of the end user.

The surface covering comprises a polyurethane varnish (PU) layer applied on the transparent wear layer. The PU layer closes micropores of the wear layer, protecting the surface covering from penetration of pollutions inside and facilitating cleaning thereof. One of the key characteristics of the polyurethane varnish layer is its transparency and colorlessness, on which the quality of visual rendering of the design to ensure attractiveness of the product depends. PU is responsible for scratch and scuff resistant properties.

According to the preferred embodiment of the present invention, the scrim is formed based on alkali free glass yarn with a linear density of 68 tex. This embodiment of the alkali free scrim increases its resistance to bending and stretching and, accordingly, increases the stiffness of the coating comprising the same. Furthermore, preferably, the scrim is formed based on glass yarn coated with a mixture of polymers, wherein the mixture of polymers preferably includes polyvinyl alcohol and a copolymer of styrene and butadiene. Said parameters are most optimal for achieving a high degree of stiffness of the LVT coating that is made with the use of the coating technology and, at the same time, for preserving the flexibility sufficient for its operation and were determined experimentally.

Furthermore, preferably, the surface covering comprises a back printed design applied on the levelling backing layer. The presence of the back printed design gives the surface covering a finished look and helps the end user to choose among various manufacturers.

An exemplary embodiment of the present invention.

The heterogeneous surface coverings on the basis of a thermoplastic material according to the present invention comprise a base layer comprising a glass veil. In the present illustrative example, a glass veil with a density of 60-70 _{Γ}/_{M}² is used. During the production of the surface covering with the use of a line for production of roll heterogeneous vinyl surface covering an impregnation paste based on plasticised PVC is applied on the unwound glass veil. For this end, as well as for forming subsequent PVC layers, the PVC paste is preliminarily prepared by mixing a PVC powder with plasticizing agents, as well as additives and fillers (except for the wear layer, which does not include fillers). After pregelification of the impregnation paste applied on the glass veil, a first part of the base layer of the invention is obtained. Then, this first part of the base layer is provided with a printed design, which, according to the preferred embodiment of the present invention, is applied on the top of the base layer with the use of printing devices. In particular, the design may be applied successively with the use of printing cylinders with engraving (using up to five different inks). Each cylinder applies one ink, and diverse ink saturation is ensured by the engraving depth of the cylinder. Alternatively, the design can be provided by a digital printer. After fixing the design, a transparent wear layer on the basis of plasticised PVC, which has high wear resistance, is applied thereon. After pregeling the wear layer, the sheet is turned over and a layer based on PVC is applied on the reverse side of the glass veil. The second part of the base layer is then formed. Then, the base layer is provided with an additional reinforcement which is a glass veil reinforced with a scrim based on glass yarn, preferably alkali free glass yarn with a linear density of 68 tex. Furthermore, preferably, the scrim is formed based on glass yarn coated with a mixture of polymers, including polyvinyl alcohol and a copolymer of styrene and butadiene. Then, the surface covering sheet is passed through the heat chamber (oven), where it is exposed to high temperatures and the layers based on PVC are connected. Then, the additional reinforcement is coated with a compact levelling backing layer based on plasticised PVC. Said levelling backing layer comprises 0,5%-I% of pigments based on total weight of layer components. If necessary, a mechanical embossing is carried out and the wear layer is coated with an additional protecting layer, preferably a polyurethane varnish. After fixing the polyurethane varnish, a back printed design is applied with the use of a printing cylinder and fixed ("dried"). The obtained sheet is preferably cut into modules of a quadrilateral shape, for example, a square or rectangular shape. During the production, according to above mentioned illustrative parameters, it is possible to obtain an heterogeneous surface covering with the use of a line for production of a heterogeneous vinyl coating with a stiffness of more than 5000 mN, which is higher than the stiffness of the conventional heterogeneous vinyl coatings.

Thus, a an heterogeneous surface covering on the basis of a thermoplastic material is developed, the implementation of which allows for achieving the technical effect consisting in increasing the stiffness of the LVT tiles that is made with the use of the coating technology and, at the same time, in preserving the flexibility sufficient for its operation.

## Claims

1. A heterogeneous surface covering comprising:
- a base layer comprising a reinforcement in the form of a glass veil, impregnated on both faces with an a thermoplastic material,
- a backing layer, located on the back of the base layer and comprising an additional reinforcement, and
- a top layer, located on the top of the base layer and comprising a printed design coated with a transparent wear layer on the basis of a thermoplastic material,
**characterized in that**
the additional reinforcement is a glass veil reinforced with a scrim based on glass yarn, wherein said layers are connected to each other by being subjected to high temperatures, and
the glass veil is impregnated with a thermoplastic material with forming a leveling backing layer.

2. The surface covering according to claim 1, wherein the surface covering is an LVT tile ("Luxury Vinyl Tile").

3. The surface covering according to claim 1, wherein the thermoplastic material is a plasticised polyvinyl chloride (PVC).

4. The surface covering according to claim 1, wherein the scrim is formed based on alkali free glass yarn with a linear density of 68 tex.

5. The surface covering according to claim 1, wherein the scrim is formed based on glass yarn coated with a mixture of polymers.

6. The surface covering according to claim 5, wherein the mixture of polymers includes polyvinyl alcohol and a copolymer of styrene and butadiene.

7. The surface covering according to claim 1, wherein the printed design is a design applied with the use of printing devices.

8. The surface covering according to claim 1, wherein the surface covering includes a polyurethane varnish layer applied on the transparent wear layer.

9. The surface covering according to claim 1, wherein the leveling backing layer comprises 0,5%-1% of pigments based on total weight of layer components.

10. The surface covering according to claim 1, wherein the surface covering comprises a back printed design applied on the levelling backing layer.

## Patentansprüche

1. Eine heterogene Oberflächenbedeckung umfassend:
- eine Basisschicht, umfassend eine Verstärkung in Form eines Glasvlieses, das auf beiden Seiten mit einem thermoplastischen Material imprägniert ist,
- eine Trägerschicht, die sich auf der Rückseite der Basisschicht befindet und eine zusätzliche Verstärkung umfasst, und
- eine Deckschicht, die sich auf der Oberseite der Basisschicht befindet und ein gedrucktes Design umfasst, das mit einer transparenten Nutzschicht auf der Basis eines thermoplastischen Materials beschichtet ist, **dadurch gekennzeichnet, dass**
die zusätzliche Verstärkung ein Glasvlies ist, das mit einem Gelege auf Glasgarnbasis verstärkt ist, wobei die Schichten miteinander verbunden werden, indem sie hohen Temperaturen ausgesetzt werden, und das Glasvlies mit einem thermoplastischen Material imprägniert wird, um eine ausgleichende Trägerschicht zu bilden.

2. Die Oberflächenbedeckung nach Anspruch 1, **dadurch gekennzeichnet, dass** die Oberflächenbedeckung eine LVT-Fliese ("Luxusvinylfliese") ist.

3. Die Oberflächenbedeckung nach Anspruch 1, **dadurch gekennzeichnet, dass** das thermoplastische Material ein weichgemachtes Polyvinylchlorid (PVC) ist.

4. Die Oberflächenbedeckung nach Anspruch 1, **dadurch gekennzeichnet, dass** das Gelege auf Basis von alkalifreiem Glasgarn mit einer linearen Dichte von 68 tex gebildet ist.

5. Die Oberflächenbedeckung nach Anspruch 1, **dadurch gekennzeichnet, dass** das Gelege auf Basis von Glasgam gebildet ist, das mit einer Polymermischung beschichtet ist.

6. Die Oberflächenbedeckung nach Anspruch 5, **dadurch gekennzeichnet, dass** die Polymermischung Polyvinylalkohol und ein Copolymer aus Styrol und Butadien umfasst.

7. Die Oberflächenbedeckung nach Anspruch 1, **dadurch gekennzeichnet, dass** das gedruckte Design ein Design ist, das unter Verwendung von Druckgeräten aufgebracht wird.

8. Die Oberflächenbedeckung nach Anspruch 1, **dadurch gekennzeichnet, dass** die Oberflächenbedeckung eine auf der transparenten Nutzschicht aufgebrachte Polyurethan-Lackschicht umfasst.

9. Die Oberflächenbedeckung nach Anspruch 1, **dadurch gekennzeichnet, dass** die ausgleichende Trägerschicht 0,5-1 % Pigmente, bezogen auf das Gesamtgewicht der Schichtbestandteile, umfasst.

10. Die Oberflächenbedeckung nach Anspruch 1, **dadurch gekennzeichnet, dass** die Oberflächenbedeckung ein auf der Rückseite aufgedrucktes Design umfasst, das auf der ausgleichenden Trägerschicht aufgebracht ist.

## Revendications

1. Un revêtement de surface hétérogène comprenant:
- une couche de base comprenant un renfort sous forme d'un voile de verre, imprégné sur ses deux faces d'un matériau thermoplastique,
- une couche de support, située au verso de la couche de base et comprenant un renfort supplémentaire, et
- une couche supérieure située au-dessus de la couche de base et comprenant un pattern imprimé recouvert d'une couche d'usure transparente à base d'un matériau thermoplastique, **caractérisé en ce que**
le renfort supplémentaire est un voile de verre renforcé d'un tissu à base de fibre de verre
dans lequel lesdites couches sont reliées les unes aux autres en étant soumises à températures élevées, et le voile de verre est imprégné d'un matériau thermoplastique pour former une couche de support nivelante.

2. Le revêtement de surface selon la revendication 1, **caractérisé en ce que** le revêtement de surface est une dalle LVT ("Luxury Vinyl Tile").

3. Le revêtement de surface selon la revendication 1, **caractérisé en ce que** le matériau thermoplastique est un polychlorure de vinyle (PVC) plastifiée.

4. Le revêtement de surface selon la revendication 1, **caractérisé en ce que** le tissu est formé à base de fibre de verre sans alcali avec une densité linéaire de 68 tex.

5. Le revêtement de surface selon la revendication 1, **caractérisé en ce que** le tissu est formé à base de fibre de verre recouverte d'un mélange de polymères.

6. Le revêtement de surface selon la revendication 5, **caractérisé en ce que** le mélange de polymères comprend de l'alcool polyvinylique et un copolymère de styrène et de butadiène.

7. Le revêtement de surface selon la revendication 1, **caractérisé en ce que** le pattern imprimé est un pattern appliqué à l'aide de dispositifs d'impression.

8. Le revêtement de surface selon la revendication 1, **caractérisé en ce que** le revêtement de surface comprend une couche de vernis polyuréthane appliquée sur la couche d'usure transparente.

9. Le revêtement de surface selon la revendication 1, **caractérisé en ce que** la couche de support nivelante comprend 0,5 % à 1 % de pigments sur la base du poids total des composants de la couche.

10. Le revêtement de surface selon la revendication 1, **caractérisé en ce que** le revêtement de surface comprend un pattern imprimé au verso appliqué sur la couche de support nivelante.
